# EUROPEAN PATENT SPECIFICATION

(11) **EP 1 429 531 B1**
(45) Date of publication and mention of the grant of the patent: **01.07.2009**
(21) Application number: 02027796.8
(22) Date of filing: 12.12.2002
(51) Int. Cl.: H04N 1/00, H04N 7/14

(54) **Portable communication device provided with camera**
Tragbares Kommunikationsgerät mit Kamera
Dispositif portable de télécommunication avec caméra

(43) Date of publication of application: 16.06.2004
(73) Proprietor: Sony Ericsson Mobile Communications AB, 221 88 Lund (SE)
(72) Inventor: Schack, Goran, 296 33 Ahus (SE)
(74) Representative: Dahnér, Christer

(56) References cited:
- EP-A- 0 930 770
- WO-A-01/39497

## Description

### TECHNICAL FIELD OF THE INVENTION

The present invention relates to a portable communication device, and more particularly, to a portable communication device provided with a camera.

### DESCRIPTION OF RELATED ART

Future portable communication devices, for instance cellular phones, will need to be capable of sending multimedia messages from phone to phone and phone to internet and vice versa. For instance, a photo taken by the portable communication device having access to a camera can be sent off as an e-mail or MMS, or could be used for customizing a display appearance of the phone. An integrated or an accessory digital camera is, therefore, a useful additional tool in a portable communication device such as a cellular phone.

Cameras in known cellular phones are either fixed in different position or could be rotated either by means of a hinge mechanism or in an upper end of the phone. An example of this technique could for instance be found in KR-A-313 146 (Samsung), describing a camera lens in a folder-type cellular phone.

When all components in the portable communication device and the device itself become smaller and smaller, it is very difficult to find space for a built-in rotatable camera without extending the device in size or provide the camera as an connectable accessory.

There is therefore a need for a portable communication device, having a rotatable camera, which does not suffer from severe increase in size due to the camera.

### SUMMARY OF THE INVENTION

The present invention is directed towards solving the problem of providing a portable communication device with a camera, in particular a built-in rotatable camera that does not require much space of the device.

Thus, one object of the present invention is to provide a portable communication device having a camera solving the problem stated above.

Typically, the basic parts of a digital camera of today are: a chipset, a camera sensor and a lens system, of which the lens system has already been described above. Typically, a complete camera of today comprises the chipset and camera sensor in the form of a square shaped module having a cylindrical lens system provided thereon. In a small sized product, this is not optimal for a rotatable camera mounted in a cylinder with the camera lens axis perpendicular to the cylinder axis, since the dimension of the square part is larger than a height of the module.

Thus, another object of the invention is to provide a portable communication device solving also this problem.

According to a first aspect of the invention, there is provided a portable communication device according to claim 1.

A second aspect of the present invention is directed towards a portable communication device including the features of the first aspect, wherein the lens element in the second ejected position is rotatable around the axis.

A third aspect of the present invention is directed towards a portable communication device including the features of the first aspect, wherein the lens element in the first position is provided in such a way that the lens can look through an opening in a rear-side of the device in a direction perpendicular to the longitudinal

A fourth aspect of the present invention is directed towards a portable communication device including the features of the first aspect, wherein the lens element is securable in the first position by means of one or more securing elements.

A fifth aspect of the present invention is directed towards a portable communication device including the features of the first aspect, wherein the securing elements are snap joints.

A sixth aspect of the present invention is directed towards a portable communication device including the features of the first aspect, wherein the securing element is a ball screw.

A seventh aspect of the present invention is directed towards a portable communication device including the features of the first aspect, wherein the housing comprises a lens insertion hole provided with guide elements such as guide grooves and/or guide rails.

An eight aspect of the present invention is directed towards a portable communication device including the features of the first aspect, wherein the lens element comprises two parts, a first part being slidable in the lens insertion hole, and a second part being rotatable around the axis.

A ninth aspect of the present invention is directed towards a portable communication device including the features of the first aspect, wherein the lens element is spring tensioned.

A tenth aspect of the present invention is directed towards a portable communication device including the features of the first aspect, wherein a display is adapted to operate as a viewfinder.

The invention has the following advantages: A built-in camera in a thin portable communication device. This provides better opportunity to design the communication device in a desired way, for instance to find a place to put it without infringing other parts of the device.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
Fig. 1 shows a portable communication device provided with a camera, according to an embodiment of the invention, wherein the camera is shown in a so-called "ready to use mode", wherein the camera is fixed to the rear-side and the viewfinder is the display of the device.
Fig. 2 shows the same portable communication device as illustrated in Fig. 1, whereby the camera is shown in an ejected position.
Fig. 3 shows the same portable communication device as in Figs. 1-2, whereby the camera is shown in a position directed to a user of the device.
Fig. 4 is a block diagram of camera circuitry.

### DETAILED DESCRIPTION OF EMBODIMENTS

As required, detailed embodiments of the present invention are disclosed herein; however, it is to be understood that the disclosed embodiments are merely examples of the invention that may be further embodied in various and alternative forms other than described below. The drawings are not necessarily to scale, and some elements may be exaggerated or minimized to show details of particular components or features. Therefore, specific structural and functional details disclosed herein are not to be interpreted as limiting in any sense, but merely as a basis for the claims and as a representative basis for enabling one skilled in the art to variously put the present invention into practice.

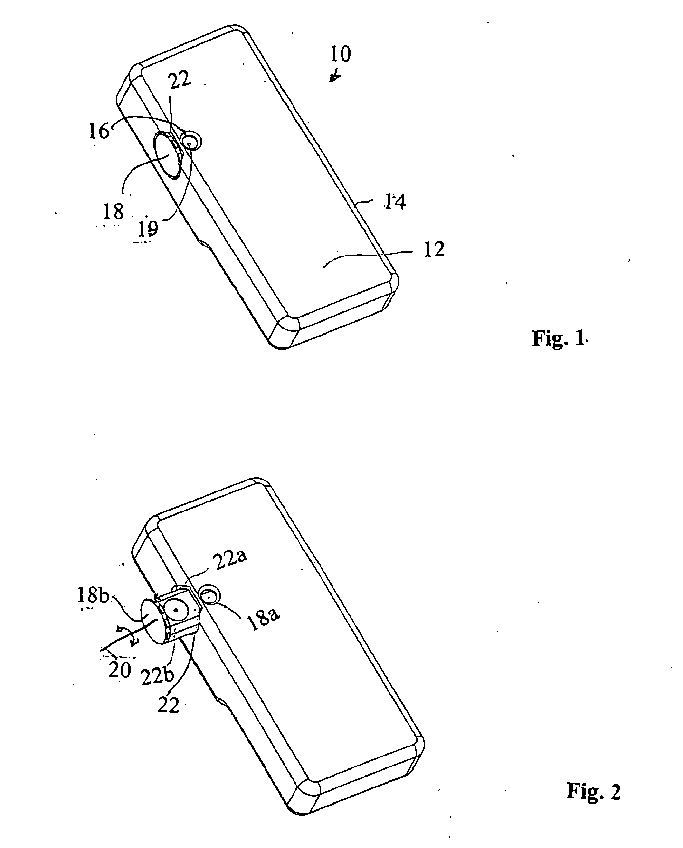

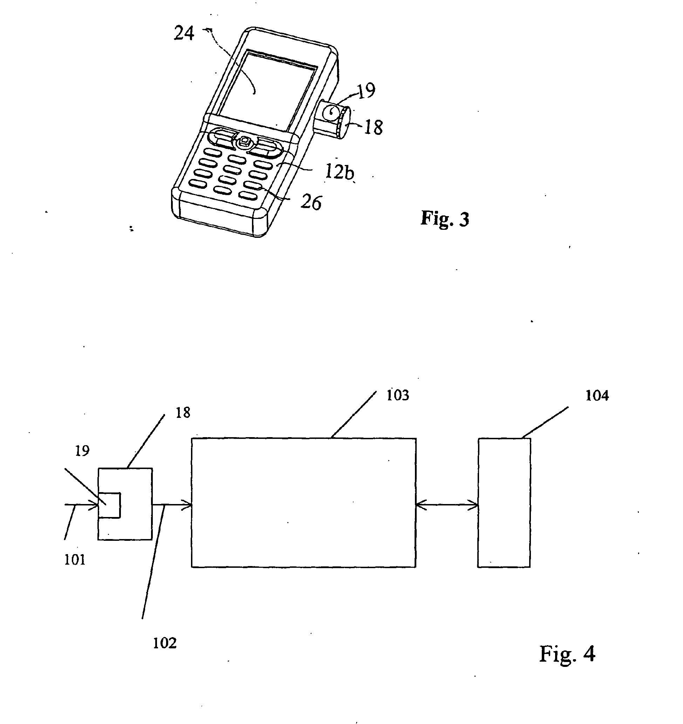

Now is referred to Fig. 1. In Fig. 1 is shown a portable communication device 10, herein a cellular phone in a view from a rear-side thereof 12. The cellular phone 10 comprises a housing 14, provided with a through going hole 16 in the rear-side 12. A lens element 18 having a lens 19 for responding to an optical image is provided, in such a way that the lens 19 can look through the hole 16. This could be provided for instance by the lens element 18 having a rod-like structure being inserted into a lens insertions hole 22, which extends in a direction perpendicular to the hole 16. In this figure, the lens element 18 is shown in a first position inside and fixed to the housing 14. The cellular phone could be used as a digital camera, whereby typically a display provided on a front side (not shown) of the cellular phone is employed as viewfinder. The cellular phone further includes conventional digital camera circuitry such as memory circuitry etc; however, this will be further described by means of a block schematic below with reference to Fig. 4.

The lens element could be secured by one or more securing elements (not shown in this figure) such as snap joints, a ball screw or the like. Any suitable securing element may be provided without departing from the invention. Preferably, the securing elements and the hole (for instance depth) is/are adapted to protect the lens well from damage. For instance, additional external distances (not shown) could be provided concentrically to the hole to increase its depth, or suitable cover elements such as lid-like covers may also be employed. Since such covers are well known for a person skilled in the art to design, they are not illustrated in detail in this figure.

Fig. 2 shows the same cellular phone as in Fig. 1, but with ejected lens element 18 in a second position (also referred to as a "pop-out" position). In this second position, a first part 18a of the lens element 18 has been slided in the lens insertion hole 22, whereby a second part 18b of the lens element, now ejected outside the lens insertion hole 22, is rotatable around an axis 20 extending in the same direction as the lens element 18 ejects. In this second position, it is possible to almost freely rotate the second part 18b of the lens element 18b comprising the lens 19. Preferably, this rotation is up to 180 °. However, any degree of rotation is possible if desired without departing from the invention.
Preferably, the lens insertion hole 22 has guide elements, such as guide grooves and/or guide rails. Corresponding grooves and/or rails is then provided at the lens element 18. For instance, the first part 18a of the lens element could be provided with suitable grooves, whereby the second part has guide elements preventing the lens 19 from rotation when pushed into the first position, i. e., preventing the lens 19 from rotating away from the hole 16.

Fig. 3 shows the same cellular phone as shown in Fig. 1 and 2, whereby the lens 19 is in a position turned to a user of the phone. This figure could represent a situation of video chatting, or when a user takes a photo of himself/herself.

Preferably, the lens element 18 is provided at the long sides of the phone (as seen by a user looking at the front side 12 b comprising a display 24). However, any suitable other position is possible, provided that space requirement and other conventional design parameters are fulfilled. Since the placement of the lens element 18 is obvious for a person skilled in the art to design, this will not be further described.

Preferably, the view-finder (for previewing images) is the display 24 of the phone, even if it can be a separate unit, normally since this is a cost efficient solution. By means of the view finder (display) 24 photos taken can be checked before sending them as MMS or e-mail. A photo can also be used to customize the display. Any button 26, or other suitable picture-enabling element could be used to take a picture, or start the camera (including video camera) function of the phone. Enter buttons may also exist to transfer picture data shown in the display 24 into a memory unit (not shown).

Preferably, the lens element is adapted to be pulled out from the first position to the second position by a user. Therefore, the design of the lens element is preferably adapted to comply with this requirement. Examples may be grip elements or the like.

Alternatively, the lens element can be spring tensioned, to be able to "pop out" for instance when pushed. Also power operated solutions, such as electrical motor or the like could be employed, provided that power consumption and other requirements are fulfilled.

Now is referred to Fig. 4 illustrating a simplified block schematic of an example of a camera function, typically for the embodiments of the invention described above.

An image 101 is directed to the lens 19 within the lens element 18, possibly comprising filter element, whereby the image 101 is transformed into an optical image signal 102. The optical image signal 102 is then further transmitted to a camera module 103, which can be provided inside the housing (not shown) of the cellular phone (not shown) at any proper location thereof. In this block schematic, the camera module 103 communicates with an integrated processor 104 that performs camera control among other tasks. The camera module comprises analogue image processing functions analogue to digital conversions (A/D) and further conventional image processing functions. All these functions, in the following referred to as "camera circuitry", can be provided as a single-chip solution or could be a module solution, whereby separate modules communicate with each other. This will not be further described since this is well known technology for a person skilled in the art. Connections can be any suitable type, including wireless such, for instance Bluetooth™ wireless control, when appropriate.

The cellular phone can operate as being provided with a still and/or video camera, and it can be adapted for transmitting images, do multimedia messaging, digital postcards etc via communication networks, such as a mobile network.

The present invention has many advantages, of which several have been mentioned above. Yet another advantage is that the viewfinder (typically the display) and the camera are not firmly arranged to each other, which implies that the "camera" can be operated with great freedom.

In the embodiments described above, a cellular phone provided with camera has been described, without any intention to limit the invention to only this type of portable communication device. Instead, the invention is directed to cover any such device.

The term "portable communication device" includes portable radio communication equipment such as a cellular phone, a smart phone, a pager, cordless phone, a communication module, a PDA or any other type of portable device communicating with radio waves. Most likely, there will be a number of varying portable communication devices in the future when the 3^{rd} generation cellular systems are implemented.

The present invention has many advantages such as: light weight, damage protected digital camera, always ready to use, no external equipment to snap on before taken a picture.

The foregoing has described the principles, preferred embodiments and modes of operation of the present invention. However, the invention should not be construed as being limited to the particular embodiments discussed above.

Thus, the above-described embodiments should be regarded as illustrative rather than restrictive, and it should be appreciated that variations may be made in those embodiments by workers skilled in the art without departing from the scope of the present invention as defined by the following claims.

## Claims

1. A portable communication device having a housing (14), a lens element (18) comprising a lens (19) having an optical axis for responding to an image (101), and providing an optical image signal (102), the device (10) comprising:
a camera element (103), responsive to the optical image signal (102), wherein the lens element (18) having a rod-like structure is slidable along a
longitudinal axis (20) of the lens element, between at least two positions, a first position essentially inside the housing and a second ejected position essentially outside the housing (14), wherein the optical axis of the lens (19) is substantially perpendicular to that axis (20).

2. A portable communication device according to claim 1, wherein the lens element (18) in the second ejected position is rotatable around the axis (20).

3. A portable communication device according to claim 1, wherein the lens element (18) in the first position is provided in such a way that the lens (19) can look through an opening (16) in a rear-side (12) of the device (10) in a direction perpendicular to the longitudinal axis (20).

4. A portable communication device according to any one of the claims 1-3, wherein the lens element (18) is securable in the first position by means of one or more securing elements.

5. A portable communication device according to claim 4, wherein the securing elements are snap joints.

6. A portable communication device according to claim 4, wherein the securing element is a ball screw.

7. A portable communication device according to any one of the claims 1-5, wherein the housing (14) comprises a lens insertion hole (22) provided with guide elements such as guide grooves and/or guide rails.

8. A portable communication device according to claim 7, wherein the lens element (18) comprises two parts, a first part (18a) being slidable in the lens insertion hole (22), and a second part (18b) being rotatable around the axis (20).

9. A portable communication device according to any one of the claims 1-8, wherein the lens element (18) is spring tensioned.

10. A portable communication device according to any one of the claims 1-9, comprising a display (24) adapted to operate as a viewfinder.

## Patentansprüche

1. Tragbares Kommunikationsgerät mit einem Gehäuse (14), einem Objektiv (18), das eine Linse (19) mit einer optischen Achse zur Ausrichtung auf ein Bild (101) enthält und das ein optisches Bildsignal (102) bereitstellt, wobei das Gerät (10) aufweist:
ein Kameraelement (103), das auf das optische Bildsignal (102) anspricht, wobei das stabähnlich geformte Objektiv (18) entlang seiner Längsachse (20) mindestens zwischen zwei Positionen verschiebbar ist, einer weitgehend innerhalb des Gehäuses befindlichen ersten und einer weitgehend aus dem Gehäuse (14) hervorstehenden zweiten Position, wobei die optische Achse der Linse im Wesentlichen senkrecht zu dieser Achse (20) steht.

2. Tragbares Kommunikationsgerät nach Anspruch 1, wobei das Objektiv (18) in der hervorstehenden zweiten Position um die Achse (20) drehbar ist.

3. Tragbares Kommunikationsgerät nach Anspruch 1, wobei das Objektiv (18) in der ersten Position so angeordnet ist, dass die Linse (19) durch eine Öffnung (16) in einer Rückseite (12) des Geräts (10) in einer zur Längsachse (20) senkrecht stehenden Richtung sehen kann.

4. Tragbares Kommunikationsgerät nach einem der Ansprüche 1-3, wobei das Objektiv (18) in der ersten Position mittels eines oder mehrerer Befestigungselemente gesichert werden kann.

5. Tragbares Kommunikationsgerät nach Anspruch 4, wobei die Befestigungselemente Schnappverbindungen sind.

6. Tragbares Komnunikationsgerät nach Anspruch 4, wobei das Befestigungselement eine Kugelrollspindel ist.

7. Tragbares Kommunikationsgerät nach einem der Ansprüche 1-5, wobei das Gehäuse (14) eine Objektiveinschuböffnung (22) mit Führungselementen wie z. B. Führungsnuten und/oder Führungsschienen aufweist.

8. Tragbares Kommunikationsgerät nach Anspruch 7, wobei das Objektiv (18) zwei Teile aufweist, ein in der Objektiveinschuböffnung (22) verschiebbares erstes Teil (18a) und ein um die Achse (20) drehbares zweites Teil (18b).

9. Tragbares Kommunikationsgerät nach einem der Ansprüche 1-8, wobei das Objektiv (18) federgespannt ist.

10. Tragbares Kommunikationsgerät nach einem der Ansprüche 1-9, welches ein Display (24) aufweist, das als Sucher verwendet werden kann.

## Revendications

1. Dispositif de communication portable ayant un boîtier (14), un élément à lentille (18) comportant une lentille (19) ayant un axe optique pour réagir à une image (101), et produisant un signal d'image optique (102), le dispositif (10) comportant :
un élément (103) de prise de vue, régissant au signal d'image optique (102), dans lequel l'élément à lentille (18) ayant une structure analogue à une tige peut coulisser le long d'un axe longitudinal (20) de l'élément à lentille, entre au moins deux positions, une première position essentiellement à l'intérieur du boîtier et une seconde position éjectée essentiellement à l'extérieur du boîtier (14), dans lequel l'axe optique de la lentille (19) est sensiblement perpendiculaire à cet axe (20).

2. Dispositif de communication portable selon la revendication 1, dans lequel l'élément à lentille (18) dans la seconde position éjectée peut tourner autour de l'axe (20).

3. Dispositif de communication portable selon la revendication 1, dans lequel l'élément à lentille (18) dans la première position est prévu d'une manière telle que la lentille (19) peut voir à travers une ouverture (16) dans un côté arrière (12) du dispositif (10) dans une direction perpendiculaire à l'axe longitudinal (20).

4. Dispositif de communication portable selon l'une quelconque des revendications 1 à 3, dans lequel l'élément à lentille (18) peut être fixé dans la première position au moyen d'un ou plusieurs éléments de fixation.

5. Dispositif de communication portable selon la revendication 4, dans lequel les éléments de fixation sont des joints à encliquetage.

6. Dispositif de communication portable selon la revendication 4, dans lequel l'élément de fixation est une vis à billes.

7. Dispositif de communication portable selon l'une quelconque des revendications 1 à 5, dans lequel le boîtier (14) présente un trou (22) d'insertion de lentille pourvu d'éléments de guidage tels que des rainures de guidage et/ou des rails de guidage.

8. Dispositif de communication portable selon la revendication 7, dans lequel l'élément à lentille (18) comporte deux parties, une première partie (18a) qui peut coulisser dans le trou (22) d'insertion de lentille, et une seconde partie (18b) qui peut tourner autour de l'axe (20).

9. Dispositif de communication portable selon l'une quelconque des revendications 1 à 8, dans lequel l'élément à lentille (18) est sollicité par un ressort.

10. Dispositif de communication portable selon l'une quelconque des revendications 1 à 9, comportant un élément d'affichage (24) conçu pour fonctionner en tant que viseur.
